# EUROPEAN PATENT SPECIFICATION

(11) **EP 3 147 984 B1**
(45) Date of publication and mention of the grant of the patent: **01.01.2020**
(21) Application number: 16189764.0
(22) Date of filing: 20.09.2016
(51) Int. Cl.: H01M 8/2484, H01M 8/2425, H01M 8/249, H01M 8/04007, H01M 8/04014, H01M 8/124, H01M 8/14

(54) **FUEL CELL MODULE INCLUDING HEAT EXCHANGER**
BRENNSTOFFZELLENMODUL MIT WÄRMETAUSCHER
MODULE DE PILE À COMBUSTIBLE INCLUANT UN ÉCHANGEUR DE CHALEUR

(30) Priority: 28.09.2015 US 201514867391
(43) Date of publication of application: 29.03.2017
(73) Proprietor: Cummins Enterprise LLC, Indianapolis, IN 46024 (US)
(72) Inventor: HICKEY, Darren Bawden, Malta, NY 12020 (US); BROWN, Keith Garrette, Malta, NY 12020 (US)
(74) Representative: Bradley, Josephine Mary

(56) References cited:
- US-A1- 2002 168 560
- US-A1- 2003 031 904
- US-A1- 2004 081 872
- US-A1- 2005 277 006
- US-A1- 2006 257 709
- US-A1- 2007 281 202
- US-A1- 2011 053 027
- US-A1- 2013 089 799

## Description

The field of the disclosure relates generally to fuel cell modules and, more particularly, to fuel cell modules including heat exchangers and methods of operation thereof. Fuel cells are electrochemical energy conversion devices that have demonstrated a potential for relatively high efficiency and low pollution in power generation. A fuel cell generally provides a direct current (DC) which is converted to alternating current (AC) through an inverter. The DC or AC voltage is used to power motors, lights, and any number of electrical devices and systems. Fuel cells operate in stationary, semi-stationary, or portable applications. See, for example, US 2011/0053027 or US 2002/168560.

Document US 2011/053027 discloses a modular fuel cell system comprising at least one fuel cell and at least one heat exchanger that is coupled to the fuel cell stack module via a manifold, and configured to increase the temperature of the air and the fuel channelled in up to a temperature of 750°C. Document US 2002/168560 discloses several fuel cell stacks accommodated on the top and on the bottom of a manifold which connects the stacks and provides fluid communication among them.

Certain fuel cells, such as solid oxide fuel cells (SOFCs), operate in large-scale power systems that provide electricity to satisfy industrial and municipal needs. Others are useful for smaller portable applications such as powering cars. Other common types of fuel cells include phosphoric acid (PAFC), molten carbonate (MCFC), and proton exchange membrane (PEMFC), all generally named after their electrolytes.

A fuel cell produces electricity by electrochemically combining a fuel and an oxidant across an ionic conducting layer. This ionic conducting layer, also labeled the electrolyte of the fuel cell, is a liquid or solid. Fuel cells are typically amassed in electrical series in an assembly of fuel cells to produce power at useful voltages or currents. Therefore, interconnect structures are used to connect or couple adjacent fuel cells in series or parallel to form a fuel cell stack. In general, components of a fuel cell include the electrolyte, an anode, and a cathode. The reactions that produce electricity generally take place at the anode and cathode where a catalyst is typically disposed to speed the reactions. The anode and cathode are constructed to include channels and porous layers to increase the surface area for the chemical reactions to occur. The electrolyte carries electrically charged particles between the anode and cathode and is otherwise substantially impermeable to both fuel and oxidant.

Piping components, such as pipes, valves, and joint connectors, are coupled to the fuel cell to channel fluids, such as the fuel, oxidant, and byproduct, into and away from the fuel cell. Sometimes heat exchangers are used to heat or cool the fluid. For example, in some systems, a plurality of fuel cells are coupled to a central heat exchanger and fluid is separately channeled from the central heat exchanger to each fuel cell. As a result, numerous piping components extend between the central heat exchanger and the plurality of fuel cells. Additionally, the productivity of all the fuel cells coupled to the central heat exchanger is affected when the central heat exchanger is shut down for maintenance and service.

Some of the fluids channeled by the piping components have relatively high temperatures, e.g., temperatures greater than 600° C. However, high temperature piping components, which are required to handle the high temperature fluids, add cost and complexity to the assembly and operation of the fuel cell. Additionally, some materials required to handle the high temperature fluids are incompatible with the fuel cell. For example, some materials, such as stainless steel, cause chromium vapor poisoning of the cathode in the fuel cell. Moreover, as the piping components are warmed by the high temperature fluids, the piping components expand, i.e., creep, which affects the integrity of the piping components, especially the joint connectors. Additionally, heat is lost from the high temperature fluids to the surrounding environment, which decreases the efficiency of the fuel cell.

Accordingly, the present invention, as defined by the appended claims, is provided.

Various features, aspects, and advantages of the present disclosure will become better understood when the following detailed description is read with reference to the accompanying drawings in which like characters represent like parts throughout the drawings, wherein:
FIG. 1 is a schematic diagram of fluid flow through an exemplary power generation system;
FIG. 2 is a perspective view of an exemplary fuel cell module;
FIG. 3 is a perspective view of an exemplary fuel cell block of the fuel cell module shown in FIG. 2.
FIG. 4 is a perspective view of a portion of the fuel cell block shown in FIG. 3; and
FIG. 5 is a plan view of an exemplary manifold of the fuel cell module shown in FIG. 2.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The fuel cell modules described herein include a heat exchanger to increase the efficiency and reduce the cost of generating electric power using the fuel cell modules. In particular, the embodiments described herein reduce the high temperature piping components required to channel fluids through the fuel cell module. The embodiments described herein also facilitate controlling fluid flow through the fuel cell module. Additionally, the fuel cell modules include a manifold that facilitates coupling the piping components and heat exchanger to fuel cells. Also, the heat exchanger described herein increases the efficiency of fluid heat transfer in the fuel cell module.

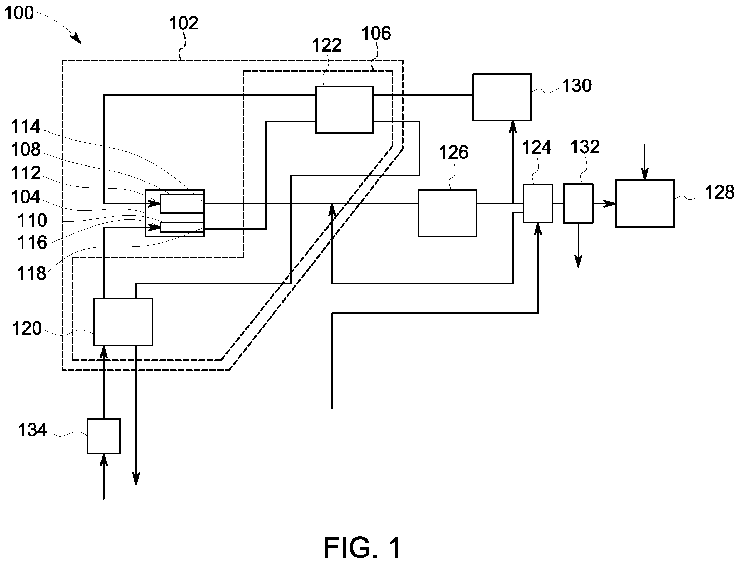

FIG. 1 is a schematic view of an exemplary electric power generation system 100 according to the invention and that includes a fuel cell module 102. Fuel cell module 102 includes a fuel cell 104 and an integrated heat exchanger 106. Fuel cell 104 is one of a solid oxide fuel cell (SOFC) and a molten carbonate fuel cell (MCFC). Fuel cell 104 generates direct current (DC) electric power by electrochemically combining a fuel and an oxidant (both discussed further below) across an ionic conducting layer (not shown). The ionic conducting layer, i.e., an electrolyte of fuel cell 104, is a liquid or solid. In some embodiments, fuel cell 104 is positioned in electrical series in an assembly of fuel cells 104 (only one shown in FIG. 1) to produce power at useful voltages or currents.

In the exemplary embodiment, fuel cell 104 includes the electrolyte, an anode 108, and a cathode 110. The electrochemical reactions that produce DC electricity generally take place at anode 108 and cathode 110 where a catalyst (not shown) is disposed to speed the reactions. Anode 108 and cathode 110 include channels and porous layers (neither shown) to increase the surface area for the chemical reactions to occur. The electrolyte carries electrically charged particles from one of anode 108 and cathode 110 to the other and is otherwise substantially impermeable to both fuel and oxidant. To facilitate fuel flow through anode 108, anode 108 includes an inlet 112 and an outlet 114. Likewise, cathode 110 includes an inlet 116 and an outlet 118. Anode 108 discharges a tail gas stream from anode outlet 114 that includes water, hydrogen, carbon monoxide (CO), carbon dioxide (CO₂), and unreacted fuel, if any.

In the exemplary embodiment, integrated heat exchanger 106 is coupled to fuel cell 104. Integrated heat exchanger 106 includes a first heat exchange component 120 and a second heat exchange component 122. First heat exchange component 120 is coupled in flow communication with fuel cell cathode inlet 116 and fuel cell cathode outlet 118 such that first heat exchange component 120 removes heat from fluid exhausted from fuel cell cathode and transfers heat to fluid that is channeled to fuel cell cathode inlet 116. Second heat exchange component 122 is coupled in flow communication with fuel cell cathode outlet 118 and fuel cell anode inlet 112 such that second heat exchange component 122 removes heat from fluid exhausted from fuel cell cathode outlet 118 and transfers heat to fluid that is channeled into fuel cell anode inlet 112. In the exemplary embodiment, first heat exchange component 120 is an air-to-air heat exchange component and second heat exchange component 122 is an air-to-fuel heat exchange component. In alternative embodiments, first heat exchange component 120 and second heat exchange component 122 are any heat exchange components that enable integrated heat exchanger 106 to function as described herein. In addition, in some embodiments, integrated heat exchanger 106 includes any number of heat exchange components that enable integrated heat exchanger 106 to function as described herein. For example, in some embodiments, integrated heat exchanger 106 includes at least one fuel-to-fuel heat exchange component.

Power generation system 100 also includes a fuel preheater 124 coupled in flow communication with anode outlet 112. Fuel preheater 124 is coupled in flow communication with a carbonaceous, i.e., hydrocarbon fuel source (not shown) that, in the exemplary embodiment, channels natural gas to fuel preheater 124. In alternative embodiments, any fuel is used that enables operation of power generation system 100 and fuel cell 104 as described herein.

Power generation system 100 further includes a hydrocarbon fuel reformer 126 coupled to fuel cell anode outlet 114 and fuel preheater 124. Hydrocarbon fuel reformer 126 converts a fuel stream including entrained tail gas stream to a hot reformed fuel stream with entrained carbon dioxide (CO₂). A combustion engine 128 is coupled in flow communication with hydrocarbon fuel reformer 126. The hot reformed fuel stream is channeled to combustion engine 128. In the exemplary embodiment, combustion engine 128 includes a reciprocating 4-stroke engine. In alternative embodiments, combustion engine 128 includes, for example, without limitation, a reciprocating 2-stroke engine, an opposed piston 2-stroke engine, and/or a gas turbine engine. In some embodiments, combustion engine 128 is mechanically coupled to an electric power generator and/or other load, e.g., without limitation, a pump and a compressor. A fuel heat exchanger 130 is coupled to hydrocarbon fuel reformer 126 such that fuel heat exchanger 130 warms a portion of fuel that is channeled from hydrocarbon fuel reformer 126 to fuel cell anode inlet 112.

In the exemplary embodiment, power generation system 100 further includes a water dehydrator or cooler 132 and a compressor 134. In alternative embodiments, cooler 132 and compressor 134 are omitted. In the exemplary embodiment, cooler 132 is coupled to fuel preheater 124 and lowers the temperature of fuel channeled from fuel preheater 124 towards combustion engine 128 such that water in the fuel condenses and is extracted. Compressor 134 is coupled to fuel cell module 102 and facilitates fluid moving through fuel cell module 102. In alternative embodiments, power generation system 100 includes any components coupled in any manner that enables power generation system 100 to function as described herein. For example, in some embodiments, power generation system 100 includes additional heat exchangers and fuel reformers. Additionally, in some embodiments, some components of power generation system 100 are coupled in parallel and/or in series.

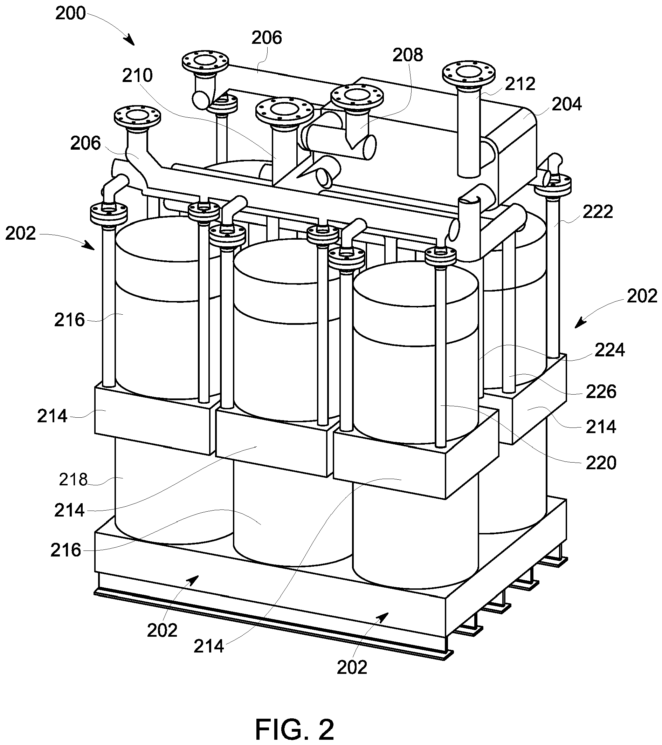

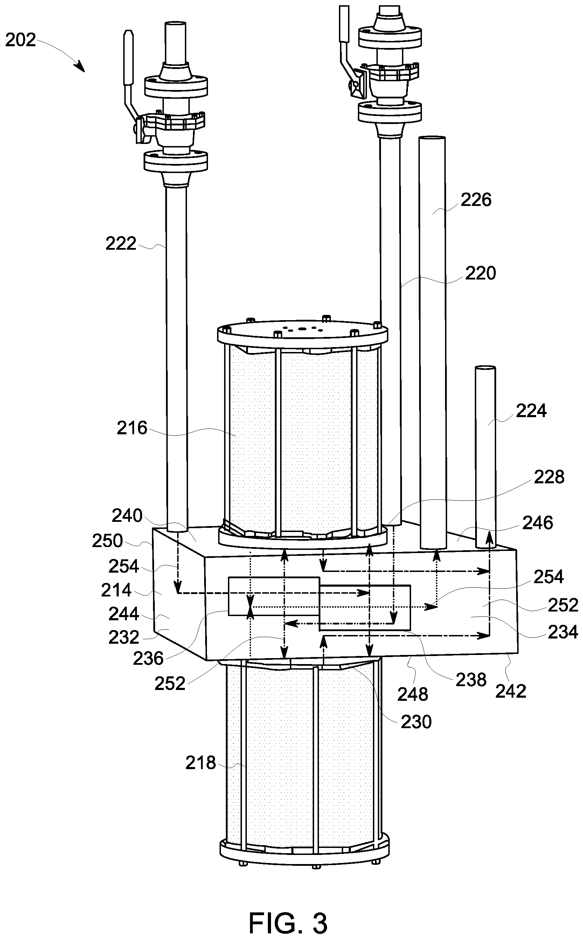

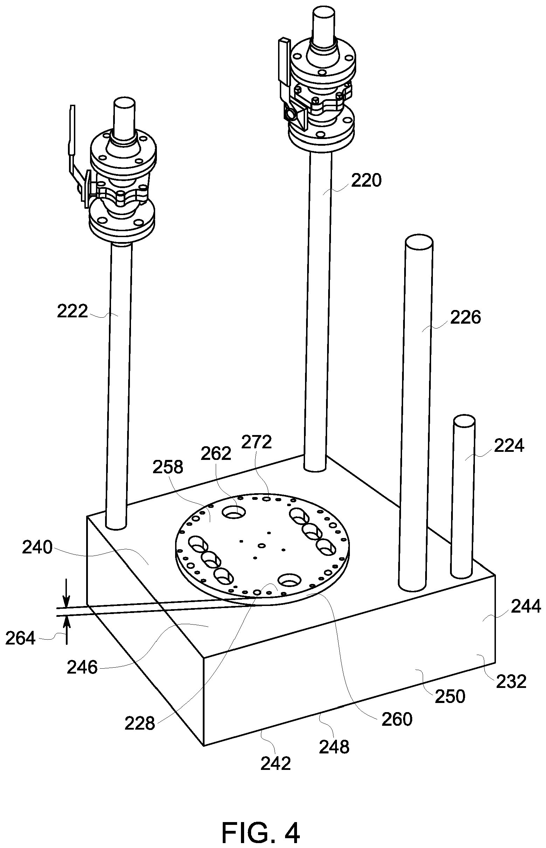

FIG. 2 is a perspective view of a fuel cell module 200 for use in power generation system 100. FIGS. 3 and 4 are perspective views of portions of fuel cell module 200. Fuel cell module 200 includes at least one fuel cell block 202, an air preheater 204, fuel inlet header 206, air inlet header 208, fuel outlet header 210, and air outlet header 212. Each fuel cell block 202 includes an integrated heat exchanger 214, a first fuel cell stack 216, a second fuel cell stack 218, a fuel inlet pipe 220, an air inlet pipe 222, a fuel outlet pipe 224, an air outlet pipe 226, an upper manifold 228, and a lower manifold 230. In alternative embodiments, fuel cell block 202 includes any number of fuel cell stacks 216, 218 and integrated heat exchangers 214 that enable fuel cell module 200 to function as described herein.

In the exemplary embodiment, each fuel cell block 202 has a power generation capacity defined as the amount of power generated by fuel cell block 202 during operation of fuel cell module 200. In some embodiments, each fuel cell block 202 has a power generation capacity in a range between about 1 kilowatt (kW) and about 500 kW. In further embodiments, each fuel cell block 202 has a power generation capacity in a range between about 25 kilowatts (kW) and about 250 kW. In some embodiments, each fuel cell block 202 has a power generation capacity of approximately 200 kW.

Fuel cell module 200 has an overall power generation capacity that is the sum of the power generation capacities of fuel cell blocks 202. In some embodiments, fuel cell module 200 has an overall power generation capacity of between about 25 kW and about 1,500 kW. In further embodiments, fuel cell module 200 has an overall power generation capacity of between about 150 kW and about 1,250 kW. In the exemplary embodiment, fuel cell module 200 includes six fuel cell blocks 202 and each fuel cell block 202 has a power generation capacity of approximately 167 kW. Accordingly, fuel cell module 200 has an overall power generation capacity of approximately 1,000 kW. In alternative embodiments, fuel cell module 200 includes any number of fuel cell blocks 202 having any power generation capacities that enable fuel cell module 200 to function as described herein.

In the exemplary embodiment, first fuel cell stack 216 and second fuel cell stack 218 each include a plurality of fuel cells 104 (shown in FIG. 1) including an electrolyte and two electrodes. First fuel cell stack 216 and second fuel cell stack 218 produce electricity by electrochemically combining a fuel and an oxidant across an ionic conducting layer. In the exemplary embodiment, first fuel cell stack 216 and second fuel cell stack 218 include fuel cells 104 that are solid oxide fuel cells. In alternative embodiments, first fuel cell stack 216 and second fuel cell stack 218 include any type of fuel cells that enables fuel cell module 200 to function as described herein. In the exemplary embodiment, first fuel cell stack 216 and second fuel cell stack 218 are coupled to integrated heat exchanger 214 on opposing sides of integrated heat exchanger 214. In alternative embodiments, first fuel cell stack 216 and second fuel cell stack 218 are coupled to integrated heat exchanger 214 in any manner that enables fuel cell block 202 to function as described herein.

In the exemplary embodiment, integrated heat exchanger 214 includes a casing 232 defining an interior space 234, a first heat exchange component 236, and a second heat exchange component 238. In reference to the orientation shown in FIG. 3, casing 232 includes a top wall 240, a bottom wall 242, and a sidewall 244 extending between top wall 240 and bottom wall 242. Each of top wall 240, bottom wall 242, and sidewall 244 includes a respective outer surface 246, 248, 250. In alternative embodiments, integrated heat exchanger 214 includes any number of walls and surfaces that enable integrated heat exchanger 214 to function as described herein.

Fluids, such as fuel 252 and air 254, are channeled through fuel cell module 200 during operation of fuel cell module 200. Specifically, fluids are channeled through fuel inlet header 206, air inlet header 208, fuel outlet header 210, air outlet header 212, fuel inlet pipe 220, air inlet pipe 222, fuel outlet pipe 224, and air outlet pipe 226. As best seen in FIG. 3, each of fuel inlet pipe 220, air inlet pipe 222, fuel outlet pipe 224, and air outlet pipe 226 channel fluid to and from first fuel cell stack 216 and second fuel cell stack 218.

Air preheater 204 is coupled to air inlet header 208 upstream of integrated heat exchanger 214 and to air outlet pipe 226 downstream of integrated heat exchanger 214. Air preheater 204 removes heat from air 254 in air outlet pipe 226 and transfers heat to air 254 in air inlet pipe 222. In the exemplary embodiment, prior to air inlet pipe 222 channeling air 254 through interior space 234, air preheater 204 increases the temperature of air 254 in air inlet pipe 222 to a temperature in a range between about 100° Celsius (C) (212° Fahrenheit (F)) and about 600° C (1112° F).

In operation, air 254 is channeled through air inlet header 208 into air inlet pipe 222 for delivery to fuel cell block 202. Each air inlet pipe 222 extends at least partially into interior space 234. Within interior space 234, air inlet pipe 222 branches into separate sections for delivering air 254 to first fuel cell stack 216 and second fuel cell stack 218. In alternative embodiments, air inlet pipe 222 feeds air 254 to any number of fuel cell stacks 216, 218 that enable fuel cell module 200 to function as described herein. In the exemplary embodiment, air inlet pipe 222 is warmed by first heat exchange component 236 such that the temperature of air 254 channeled through air inlet pipe 222 is increased. In the exemplary embodiment, on the exterior of integrated heat exchanger 214, air 254 in air inlet pipe 222 is maintained at a temperature less than 600° C. In interior space 234, first heat exchange component 236 increases the temperature of air 254 in air inlet pipe 222 to a temperature in a range between about 600° C (1112° F) and about 800° C (1472° F). As a result, high temperature piping components are only required for the portions of air inlet pipe 222 within interior space 234. High temperature piping components are components designed and manufactured for channeling fluid having relatively high temperatures, i.e., temperatures greater than about 600° C (1112° F).

During operation of fuel cell module 200, fuel 252 is channeled through fuel inlet header 206 into fuel inlet pipe 220 for delivery to fuel cell block 202. Each fuel inlet pipe 220 extends at least partially into interior space 234. In the exemplary embodiment, within interior space 234, fuel inlet pipe 220 branches into separate sections for delivering fuel to first fuel cell stack 216 and second fuel cell stack 218. In alternative embodiments, fuel inlet pipe 220 feeds fuel to any number of fuel cell stacks 216, 218 that enable fuel cell module 200 to function as described herein. In the exemplary embodiment, fuel inlet pipe 220 is warmed by second heat exchange component 238 such that the temperature of fluid channeled through fuel inlet pipe 220 is increased. In the exemplary embodiment, on the exterior of integrated heat exchanger 214, fluid fuel inlet pipe 220 is maintained at a temperature less than 600° C. In interior space 234, second heat exchange component 238 facilitates increasing the temperature of fluid in fuel inlet pipe 220 to a temperature in a range between about 600° C (1112° F) and about 800° C (1472° F). As a result, high temperature piping components are only required for the portions of fuel inlet pipe 220 within interior space 234.

In the exemplary embodiment, fuel is exhausted from first fuel cell stack 216 and second fuel cell stack 218 into fuel outlet pipe 224, which extends at least partially into interior space 234. Fuel outlet pipe 224 channels fuel out of interior space 234 and to fuel outlet header 210. Air is exhausted from first fuel cell stack 216 and second fuel cell stack 218 into air outlet pipe 226, which extends at least partially into interior space 234. Air outlet pipe 226 channels air out of interior space 234 and to air outlet header 212. Inside interior space 234, first heat exchange component 236 facilitates heat exchange between air outlet pipe 226 and air inlet pipe 222 and second heat exchange component 238 facilitates heat exchange between air outlet pipe 226 and air inlet pipe 222. As a result, fluid in air outlet pipe 226 decreases in temperature as fluid is channeled through interior space 234. In the exemplary embodiment, the temperature of fluid in air outlet pipe 226 is lowered such that the temperature is less than about 600° C (1112° F) prior to exiting interior space 234. As a result, high temperature piping components are only required for the portions of air outlet pipe 226 within interior space 234.

In the exemplary embodiment, in reference to the orientation shown in FIG. 3, upper manifold 228 is positioned above integrated heat exchanger 214 and lower manifold 230 is positioned below integrated heat exchanger 214. Upper manifold 228 is positioned between and coupled to integrated heat exchanger 214 and first fuel cell stack 216. Lower manifold 230 is positioned between and coupled to integrated heat exchanger 214 and second fuel cell stack 218. In alternative embodiments, the components of fuel cell module 200 are positioned in any manner that enables fuel cell module 200 to function as described herein. Additionally, in alternative embodiments, fuel cell module 200 includes any number of manifolds that enable fuel cell module 200 to function as described herein. In the exemplary embodiment, upper manifold 228 and lower manifold 230 are substantially identical. Accordingly, additional description of lower manifold 230 is unnecessary since upper manifold 228 is described in detail below. In alternative embodiments, lower manifold 230 is different from upper manifold 228.

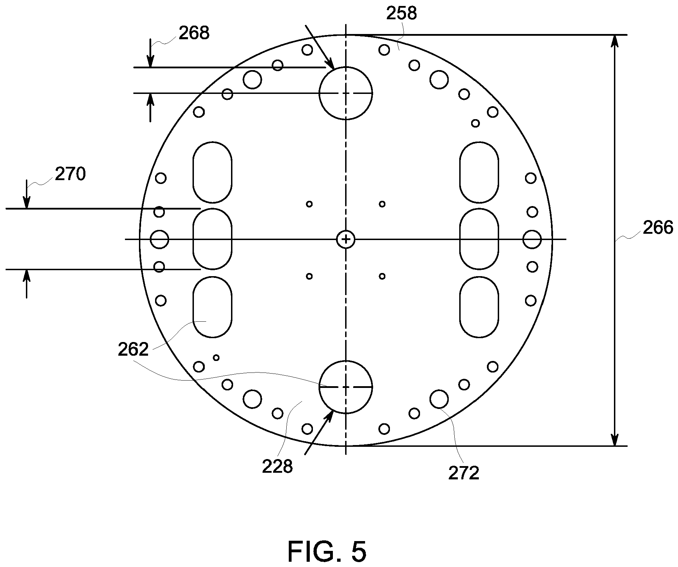

FIG. 5 is a plan view of upper manifold 228. Upper manifold 228 includes a first surface 258, a second surface 260 opposite first surface 258, and a plurality of openings 262. Openings 262 are defined in and extend between first surface 258 and second surface 260 to provide a channel for fluid flow through upper manifold 228. Upper manifold 228 has a thickness 264 measured between first surface 258 and second surface 260. In some embodiments, thickness 264 is in a range between about 2 millimeters (mm) (0.1 inches (in.)) and about 400 mm (16 in.). In the exemplary embodiment, thickness 264 is approximately 19 mm (0.75 in.). Upper manifold 228 has a maximum width 266 defined between the lateral edges of upper manifold 228. In the exemplary embodiment, upper manifold 228 has a circular shape including a diameter equal to maximum width 266. In some embodiments, maximum width 266 is in a range between about 254 mm (10 in.) and about 1270 mm (50 in.). In the exemplary embodiment, maximum width 266 is approximately 406 mm (16 in.). In alternative embodiments, upper manifold 228 is any shape and size that enables upper manifold 228 to function as described herein.

In the exemplary embodiment, each of openings 262 has an at least partially circular shape with a radius 268. In some embodiments, radius 268 is in a range between about 2.5 mm (0.1 in.) and about 254 mm (10 in.). In the exemplary embodiment, radius 268 is approximately 25 mm (1 in.). Some of openings 262 are elongated to form a slot-like shape with a length 270. In some embodiments, length 270 is in a range between about 25 mm (1in.) and about 254 mm (10 in.). In the exemplary embodiment, length 270 is approximately 64 mm (2.5 in.). In alternative embodiments, openings 262 are any shape and size that enable upper manifold 228 to function as described herein. In the exemplary embodiment, upper manifold 228 further includes a plurality of holes 272 to facilitate coupling upper manifold 228 to other components.

In reference back to FIGS. 3 and 4, upper manifold 228 is coupled to first fuel cell stack 216 such that first surface 258 contacts first fuel cell stack 216 and second surface 260 contacts integrated heat exchanger 214. Fuel inlet pipe 220, air inlet pipe 222, fuel outlet pipe 224, and air outlet pipe 226 are coupled to upper manifold 228 adjacent openings 262. As a result, fluid in fuel inlet pipe 220 and air inlet pipe 222 is channeled through openings 262 into first fuel stack 216. Additionally, fluid in first fuel stack 216 is channeled through openings 262 into fuel outlet pipe 224 and air outlet pipe 226.

Referring to FIGS. 1-3, a method of channeling fluid 252, 254 through fuel cell module 200 includes channeling fluid 252, 254 through fuel cell block 200. In some embodiments, fluid 252, 254 is separately channeled through a plurality of fuel cell blocks 202 coupled together to form fuel cell module 200. In the exemplary embodiment, fluid 252, 254 is channeled through interior space 234. In some embodiments, fluid 252, 254 is channeled through air outlet header 212, fuel inlet pipe 220, air inlet pipe 222, fuel outlet pipe 224, and air outlet pipe 226, which extend at least partially through interior space 234. In the exemplary embodiment, fluid 252, 254 is channeled through openings 262 and into fuel cell 104. Fluid 252, 254 is channeled out of fuel cell 104 through openings 262 and through interior space 234. As fluids 252, 254 are channeled through interior space 234, heat is removed from fluid 252, 254 channeled out of fuel cell 104 and is transferred to fluid 252, 254 that is channeled towards fuel cell 104. Integrated heat exchanger 214 is configured to raise the temperature of fluid 252, 254 to a temperature in a range between about 600° C and about 800° C. In some embodiments, fluid 252, 254 is maintained at a temperature in a range between about 100° C and about 600° C prior to channeling fluid 252, 254 through interior space 234.

The above described fuel cell modules include a heat exchanger to increase the efficiency and reduce the cost of generating electric power using the fuel cell modules. In particular, the embodiments described herein reduce the high temperature piping components required to channel fluids through the fuel cell module. The embodiments described herein also facilitate controlling fluid flow through the fuel cell module. Additionally, the fuel cell modules include a manifold that facilitates coupling the piping components and heat exchanger to fuel cells. Also, the heat exchanger described herein increases the efficiency of fluid heat transfer in the fuel cell module.

An exemplary technical effect of the methods, systems, and apparatus described herein includes at least one of: (a) increasing the operating efficiency of fuel cell modules; (b) decreasing the time and cost required to maintain and repair fuel cell modules; (c) reducing the cost of assembling and operating fuel cell modules; (d) reducing the amount of high temperature piping components required in fuel cell modules; (e) controlling the pressure drop of fluid through fuel cell modules; and (f) reducing the complexity of piping connections in the fuel cell modules.

Exemplary embodiments of fuel cell modules that include an integrated heat exchanger are described above in detail. The fuel cell modules that include an integrated heat exchanger, and methods of operating such systems and devices are not limited to the specific embodiments described herein, but rather, components of systems and/or steps of the methods may be utilized independently and separately from other components and/or steps described herein. For example, the methods may also be used in combination with other systems, and are not limited to practice with only the fuel cell modules, fuel cell systems, and methods as described herein. Rather, the exemplary embodiment can be implemented and utilized in connection with many other fuel cell applications that are currently configured to receive and accept fuel cells, e.g., and without limitation, distributed generation facilities in remote areas and industrial facilities.

Although specific features of various embodiments of the invention may be shown in some drawings and not in others, this is for convenience only.

This written description uses examples to disclose the invention, and also to enable any person skilled in the art to practice the invention, including making and using any devices or systems and performing any incorporated methods. The scope of the invention is defined by the claims.

## Claims

1. A fuel cell block (202) for use in a fuel cell module (200), said fuel cell block comprising:
a first fuel cell (104) and a second fuel cell, each including an anode and a cathode;
a heat exchanger (214) coupled in flow communication with said first fuel cell (140) and said second fuel cell (140), said heat exchanger (214) comprising a first heat exchange component (120) in fluid communication with each cathode of the first fuel cell and the second fuel cell, a second heat exchange component (122) in fluid communication with each anode of the first fuel cell and the second fuel cell, and a casing (232) defining an interior space (234), wherein the first heat exchange component and the second heat exchange component are disposed within the casing;
an air inlet pipe (222) for channeling air (254) to each cathode of said first fuel cell and said second fuel cell, said air inlet pipe (222) at least partially extending through the interior space (234), said first heat exchange component (120) configured to increase the temperature of the air in said air inlet pipe, wherein only portions of said air inlet pipe (222) within said interior space (234) are formed using high temperature piping components, wherein high temperature piping components are piping components for channeling a fluid having a temperature greater than 600° C;
a fuel inlet pipe (220) for channeling fuel (252) to each anode of said first fuel cell and said second fuel cell, said fuel inlet pipe (220) at least partially extending through the interior space (234), said second heat exchange component configured to increase the temperature of the fuel in said fuel inlet pipe;
an air outlet pipe (226) for channeling air away from each cathode of said first fuel cell (104) and said second fuel cell, said air outlet pipe (226) at least partially extending through the interior space (234);
a fuel outlet pipe (224) for channeling fuel away from each anode of said first fuel cell (104) and said second fuel cell, said fuel outlet pipe (224) at least partially extending through the interior space (234); and
a first manifold (228) and a second manifold (230), each comprising a first surface (258) and a second surface (260) opposite said first surface, said first manifold (228) fluidly coupled to said first fuel cell (104) and said heat exchanger (214) such that said first surface (258) of the first manifold contacts said first fuel cell (104) and said second surface (260) of the first manifold contacts said heat exchanger (214), the second manifold coupled fluidly to the second fuel cell and the heat exchanger such that the first surface of the second manifold contacts the second fuel cell and the second surface of the second manifold contacts the heat exchanger, wherein said first manifold (228) and said second manifold (230) are coupled fluidly to said air inlet pipe (222), said fuel inlet pipe (220), said air outlet pipe (226), and said fuel outlet pipe (224);
wherein the first fuel cell and the second fuel cell are disposed on opposing surfaces of the heat exchanger such that the heat exchanger is disposed between the first fuel cell and the second fuel cell.

2. The fuel cell block (202) in accordance with claim 1, wherein said first fuel cell (104), said second fuel cell (104), and said heat exchanger (214) are aligned in a vertical direction, said heat exchanger positioned between said first fuel cell and said second fuel cell.

3. A fuel cell module (200) comprising:
at least one fuel cell block (202) as defined by any preceding claim.

4. The fuel cell module (200) in accordance with claim 3, wherein said heat exchanger (214) is configured to raise the temperature of the fluid (252, 254) to a temperature in a range between 600° C and 800° C.

5. The fuel cell module (200) in accordance with any of claims 3 or 4, wherein at least one of said first heat exchange component (120) and said second heat exchange component (122) is configured to remove heat from the air in said air outlet pipe.

## Patentansprüche

1. Brennstoffzellenblock (202) zur Verwendung in einem Brennstoffzellenmodul (200), wobei der Brennstoffzellenblock umfasst:
eine erste Brennstoffzelle (104) und eine zweite Brennstoffzelle, welche jeweils eine Anode und eine Kathode umfassen;
einen Wärmetauscher (214), welcher fluidisch mit der ersten Brennstoffzelle (140) und mit der zweiten Brennstoffzelle (140) kommuniziert, wobei der Wärmetauscher (214) eine erste Wärmetauschkomponente (120), welche fluidisch mit jeder Kathode der ersten Brennstoffzelle und der zweiten Brennstoffzelle kommuniziert, eine zweite Wärmetauschkomponente (122), welche fluidisch mit jeder Anode der ersten Brennstoffzelle und der zweiten Brennstoffzelle kommuniziert, und ein Gehäuse (232) umfasst, welches einen Innenraum (234) definiert, wobei die erste Wärmetauschkomponente und die zweite Wärmetauschkomponente innerhalb des Gehäuses angeordnet sind;
ein Lufteinlassrohr (222) zum Kanalisieren von Luft (254) zu jeder Kathode der ersten Brennstoffzelle und der zweiten Brennstoffzelle, wobei das Lufteinlassrohr (222) sich mindestens teilweise durch den Innenraum (234) erstreckt, wobei die erste Wärmetauschkomponente (120) konfiguriert ist, um die Temperatur der Luft in dem Lufteinlassrohr zu erhöhen, wobei nur Abschnitte des Lufteinlassrohrs (222) innerhalb des Innenraums (234) unter Verwendung von Hochtemperatur-Rohrkomponenten geformt sind, wobei die Hochtemperatur-Rohrkomponenten Rohrkomponenten zum Kanalisieren eines Fluids sind, welches eine Temperatur aufweist, die mehr als 600° C beträgt;
ein Brennstoffeinlassrohr (220) zum Kanalisieren eines Brennstoffs (252) zu jeder Anode der ersten Brennstoffzelle und der zweiten Brennstoffzelle, wobei das Brennstoffeinlassrohr (220) sich mindestens teilweise durch den Innenraum (234) erstreckt, wobei die zweite Wärmetauschkomponente konfiguriert ist, um die Temperatur des Brennstoffs innerhalb des Brennstoffeinlassrohrs zu erhöhen;
ein Luftauslassrohr (226) zum Kanalisieren von Luft von jeder Kathode der ersten Brennstoffzelle (104) und der zweiten Brennstoffzelle, wobei das Luftauslassrohr (226) sich mindestens teilweise durch den Innenraum (234) erstreckt;
ein Brennstoffauslassrohr (224) zum Kanalisieren von Brennstoff von jeder Anode der ersten Brennstoffzelle (104) und der zweiten Brennstoffzelle, wobei das Brennstoffauslassrohr (224) sich mindestens teilweise durch den Innenraum (234) erstreckt; und
einen ersten Verteiler (228) und einen zweiten Verteiler (230), welche jeweils eine erste Oberfläche (258) und eine zweite Oberfläche (260) umfassen, welche der ersten Oberfläche gegenüberliegt, wobei der erste Verteiler (228) mit der ersten Brennstoffzelle (104) und mit dem Wärmetauscher (214) fluidisch gekoppelt ist, sodass die erste Oberfläche (258) des ersten Verteilers die erste Brennstoffzelle (104) kontaktiert und die zweite Oberfläche (260) des ersten Verteilers den Wärmetauscher (214) kontaktiert, wobei der zweite Verteiler mit der zweiten Brennstoffzelle und mit dem Wärmetauscher fluidisch gekoppelt ist, sodass die erste Oberfläche des zweiten Verteilers die zweite Brennstoffzelle kontaktiert und die zweite Oberfläche des zweiten Verteilers den Wärmetauscher kontaktiert, wobei der erste Verteiler (228) und der zweite Verteiler (230) mit dem Lufteinlassrohr (222), mit dem Brennstoffeinlassrohr (220), mit dem Luftauslassrohr (226) und mit dem Brennstoffauslassrohr (224) fluidisch gekoppelt sind;
wobei die erste Brennstoffzelle und die zweite Brennstoffzelle auf gegenüberliegenden Oberflächen des Wärmetauschers angeordnet sind, sodass der Wärmetauscher zwischen der ersten Brennstoffzelle und der zweiten Brennstoffzelle angeordnet ist.

2. Brennstoffzellenblock (202) nach Anspruch 1, wobei die erste Brennstoffzelle (104), die zweite Brennstoffzelle (104) und der Wärmetauscher (214) in einer senkrechten Richtung ausgerichtet sind, wobei der Wärmetauscher zwischen der ersten Brennstoffzelle und der zweiten Brennstoffzelle angeordnet ist.

3. Brennstoffzellenmodul (200), umfassend:
mindestens einen Brennstoffzellenblock (202) nach einem der vorhergehenden Ansprüche.

4. Brennstoffzellenmodul (200) nach Anspruch 3, wobei der Wärmetauscher (214) konfiguriert ist, um die Temperatur des Fluids (252, 254) auf eine Temperatur im Bereich zwischen 600° C und 800° C zu erhöhen.

5. Brennstoffzellenmodul (200) nach einem der Ansprüche 3 oder 4, wobei mindestens eine der ersten Wärmetauschkomponente (120) und der zweiten Wärmetauschkomponente (122) konfiguriert ist, um Wärme aus der Luft in dem Luftauslassrohr zu entfernen.

## Revendications

1. Bloc de piles à combustible (202) destiné à être utilisé dans un module de piles à combustible (200), ledit bloc de piles à combustible comprenant :
une première pile à combustible (104) et une seconde pile à combustible dont chacune inclut une anode et une cathode ;
un échangeur thermique (214) qui est couplé en termes de communication de flux avec ladite première pile à combustible (140) et ladite seconde pile à combustible (140), ledit échangeur thermique (214) comprenant un premier composant d'échange thermique (120) qui est en communication en termes de fluide avec chaque cathode de la première pile à combustible et de la seconde pile à combustible, un second composant d'échange thermique (122) qui est en communication en termes de fluide avec chaque anode de la première pile à combustible et de la seconde pile à combustible et un carter (232) qui définit un espace intérieur (234), dans lequel le premier composant d'échange thermique et le second composant d'échange thermique sont disposés à l'intérieur du carter ;
un conduit d'entrée d'air (222) pour canaliser de l'air (254) sur chaque cathode de ladite première pile à combustible et de ladite seconde pile à combustible, ledit conduit d'entrée d'air (222) s'étendant au moins partiellement au travers de l'espace intérieur (234), ledit premier composant d'échange thermique (120) étant configuré de manière à ce qu'il augmente la température de l'air dans ledit conduit d'entrée d'air, dans lequel seulement des parties dudit conduit d'entrée d'air (222) à l'intérieur dudit espace intérieur (234) sont formées en utilisant des composants de conduite haute température, dans lequel les composants de conduite haute température sont des composants de conduite pour canaliser un fluide qui présente une température supérieure à 600 °C ;
un conduit d'entrée de combustible (220) pour canaliser un combustible (252) sur chaque anode de ladite première pile à combustible et de ladite seconde pile à combustible, ledit conduit d'entrée de combustible (220) s'étendant au moins partiellement au travers de l'espace intérieur (234), ledit second composant d'échange thermique étant configuré de manière à ce qu'il augmente la température du combustible dans ledit conduit d'entrée de combustible ;
un conduit de sortie d'air (226) pour canaliser l'air hors de chaque cathode de ladite première pile à combustible (104) et de ladite seconde pile à combustible, ledit conduit de sortie d'air (226) s'étendant au moins partiellement au travers de l'espace intérieur (234) ;
un conduit de sortie de combustible (224) pour canaliser le combustible hors de chaque anode de ladite première pile à combustible (104) et de ladite seconde pile à combustible, ledit conduit de sortie de combustible (224) s'étendant au moins partiellement au travers de l'espace intérieur (234) ; et
un premier collecteur (228) et un second collecteur (230) dont chacun comprend une première surface (258) et une seconde surface (260) qui est opposée à ladite première surface, ledit premier collecteur (228) étant couplé en termes de fluide à ladite première pile à combustible (104) et audit échangeur thermique (214) de telle sorte que ladite première surface (258) du premier collecteur entre en contact avec ladite première pile à combustible (104) et que ladite seconde surface (260) du premier collecteur entre en contact avec ledit échangeur thermique (214), le second collecteur étant couplé en termes de fluide à la seconde pile à combustible et à l'échangeur thermique de telle sorte que la première surface du second collecteur entre en contact avec la seconde pile à combustible et que la seconde surface du second collecteur entre en contact avec l'échangeur thermique, dans lequel ledit premier collecteur (228) et ledit second collecteur (230) sont couplés en termes de fluide audit conduit d'entrée d'air (222), audit conduit d'entrée de combustible (220), audit conduit de sortie d'air (226) et audit conduit de sortie de combustible (224) ;
dans lequel la première pile à combustible et la seconde pile à combustible sont disposées sur des surfaces opposées de l'échangeur thermique de telle sorte que l'échangeur thermique soit disposé entre la première pile à combustible et la seconde pile à combustible.

2. Bloc de piles à combustible (202) selon la revendication 1, dans lequel ladite première pile à combustible (104), ladite seconde pile à combustible (104) et ledit échangeur thermique (214) sont alignés dans une direction verticale, ledit échangeur thermique étant positionné entre ladite première pile à combustible et ladite seconde pile à combustible.

3. Module de piles à combustible (200) comprenant :
au moins un bloc de piles à combustible (202) tel que défini selon l'une quelconque des revendications qui précèdent.

4. Module de piles à combustible (200) selon la revendication 3, dans lequel ledit échangeur thermique (214) est configuré de manière à ce qu'il augmente la température du fluide (252, 254) jusqu'à une température dans une plage entre 600 °C et 800 °C.

5. Module de piles à combustible (200) selon l'une quelconque des revendications 3 ou 4, dans lequel au moins un composant pris parmi ledit premier composant d'échange thermique (120) et ledit second composant d'échange thermique (122) est configuré de manière à ce qu'il évacue la chaleur de l'air dans ledit conduit de sortie d'air.
